# EUROPÄISCHE PATENTSCHRIFT

(11) **EP 2 914 908 B1**
(45) Veröffentlichungstag und Bekanntmachung des Hinweises auf die Patenterteilung: **22.08.2018**
(21) Anmeldenummer: 13786659.6
(22) Anmeldetag: 04.11.2013
(51) Int. Cl.: F24S 23/74, F24S 30/20, F24S 40/00

(54) **SOLARKOLLEKTOR**
SOLAR COLLECTOR
COLLECTEUR SOLAIRE

(30) Priorität: 01.11.2012 DE 102012219999
(43) Veröffentlichungstag der Anmeldung: 09.09.2015
(73) Patentinhaber: Sunoyster Systems GmbH, 25469 Halstenbek (DE)
(72) Erfinder: ULRICH, Stephan, 25469 Halstenbek (DE); FRIEDEN, Peter, 51065 Köln (DE); MUSCHKE, Bastian, 20253 Hamburg (DE)
(74) Vertreter: Thomas, Götz
(86) Internationale Anmeldenummer: PCT/EP2013/072956
(87) Internationale Veröffentlichungsnummer: WO 2014/068119

(56) Entgegenhaltungen:
- WO-A1-98/03824
- WO-A1-02/097341
- WO-A1-2007/109901
- WO-A1-2008/153892
- WO-A1-2011/001545
- JP-A- H11 173 257
- US-A- 4 109 638
- US-A- 4 214 572
- US-A1- 2008 308 091
- US-A1- 2009 223 510
- US-B1- 6 953 038

## Beschreibung

Die Erfindung betrifft einen der Sonne nachführbaren Solarkollektor.

Im Stand der Technik sind der Sonne nachführbare Solarkollektoren bekannt, bei denen mithilfe von einem optischen Spiegel einfallende Sonnenstrahlung auf einen Receiver gebündelt wird. Der Receiver wandelt die auf ihn einfallende Sonnenstrahlung in Wärme- und/oder elektrische Energie um. In Dokument EP 1 290 383 B1 ist ein entsprechender Solarkollektor offenbart, bei dem ein Parabolspiegel die auf ihn auftreffende Sonnenstrahlung in einem Brennpunkt bündelt. In diesem Brennpunkt ist ein Receiver angeordnet. Damit sich der Receiver im Verlauf des Tages unabhängig vom Sonnenstand immer im Brennpunkt des Parabolspiegels befindet, muss die Anordnung aus Parabolspiegel und Receiver der Sonne nachgeführt werden. Dazu ist eine zweiachsige Nachführung erforderlich, d. h. hinsichtlich des Azimuts und der Elevation. Eine entsprechende Nachführung ist aufwändig. Außerdem ist für jede Anordnung aus Parabolspiegel und Brennpunkt eine separate Nachführung erforderlich, so dass eine Mehrzahl entsprechender Anordnungen auch eine Mehrzahl an Nachführeinrichtungen erfordert. Auch dies ist aufwändig, kostenintensiv und darüber hinaus noch störungsanfällig.

Das Dokument US 2009/223510 A1 offenbart ein Solarkollektorsystem umfassend mehrere Kollektoreinheiten mit jeweils einem Spiegelelement, das aus zwei zueinander zugewandten halbparabolischen Spiegelrinnen mit einer gemeinsamen Brennlinie ausgebildet ist, wobei die Spiegelelemente und die entlang der Brennlinien angeordneten Receiverelemente in eine witterungssichere Stellung schwenkbar sind. Der Erfindung liegt die Aufgabe zu Grunde, einen Solarkollektor zu schaffen, bei dem die Nachteile aus dem Stand der Technik nicht oder nur noch im verringerten Maße auftreten. Gelöst wird diese Aufgabe durch einen Solarkollektor gemäß dem Hauptanspruch. Vorteilhafte Weiterbildungen sind Gegenstand der abhängigen Ansprüche.
Demnach betrifft die Erfindung einen Solarkollektor umfassend eine erste, um eine Schwenkachse schwenkbar gelagerte Kollektoreinheit mit einem Spiegelelement und einem mit dem Spiegelelement verbundenen, im Fokus des Spiegelelementes angeordneten Receiverelement, wobei die Schwenkachse der Kollektoreinheit entlang einer Kante des Spiegelelementes verläuft, wobei wenigstens eine weitere Kollektoreinheit entsprechend der ersten Kollektoreinheit vorgesehen ist, wobei die Spiegelelemente der ersten und der weiteren Kollektoreinheiten halbparaboloide Spiegelrinnen mit einer Brennlinie als Fokus sind und sich die Receiverelemente der Kollektoreinheiten jeweils entlang der Brennlinie der jeweiligen Spiegelrinnen, parallel zur jeweiligen Schwenkachse erstrecken, die Schwenkachsen der ersten und der weiteren Kollektoreinheiten parallel und in Richtung senkrecht zu den Schwenkachsen beabstandet angeordnet sind, und die ersten und die weiteren Kollektoreinheiten jeweils derart über eine Kopplungseinrichtung gekoppelt sind, dass ein Verschwenken der ersten Kollektoreinheit zu einem synchronen Verschwenken der weiteren Kollektoreinheiten führt. Die Kollektoreinheiten lassen sich derart verschwenken, dass die den Receiverelementen jeweils zugewandte Seite der Spiegelelemente in eine witterungssichere Stellung verschwenkt werden kann, und das jeweilige Receiverelement an einem Tragarm angeordnet ist, welcher zu dem Spiegelelement hin klappbar ist. Der Tragarm weist ein Klappgelenk auf, das ein Abklappen des Tragarms beim Übergang in die witterungssichere Stellung ermöglicht, wobei an dem Klappgelenk eine Sperreinrichtung vorgesehen ist, die ein unerwünschtes Einklappen des Tragarms verhindert, für alle Betriebsstellungen in denen das Spiegelelement auf die Sonne ausgerichtet ist. Die Erfindung hat erkannt, dass durch eine Kombination zweier Maßnahmen eine verbesserte Nachführung erreicht wird. Die Kombination besteht zum einen in einer gezielten Simplifikation, indem bei dem erfindungsgemäßen Solarkollektor halbparaboloide Spiegelrinnen zum Einsatz kommen. Für diese ist bereits eine einachsige Nachführung ausreichend, um eine zufriedenstellende Ausbeute der Sonnenenergie zu erhalten. Die Spiegelrinnen sind dabei bevorzugt in Ost-West-Richtung ausgerichtet und können durch Verschwenken hinsichtlich der Elevation der Sonne nachgeführt werden. Zudem bestehen bei halbparaboloiden Rinnen im zugeklappten Zustand geringere Windlasten als bei Vollparaboloiden. Die andere Maßnahme besteht in einer einfachen, aber wirksamen Verkoppelung, die eine stets synchronisierte Ausrichtung mehrerer Spiegelrinnen sicherstellt. Dank der Reduktion auf die einachsige Nachführung kann eine solche Synchronisation auch mit geringem Aufwand sehr genau durchgeführt werden. Insbesondere im Vergleich mit herkömmlichen punktförmig fokussierenden, deshalb zwingend zweiachsig nachgeführten Parabolspiegeln ergibt sich eine deutliche Vereinfachung, die nicht nur den Herstellaufwand verringert, sondern insbesondere eine höhere Zuverlässigkeit erreicht, was letztlich dank größerer Betriebssicherheit auch zu einer Ertragssteigerung führt. Zudem kann der Nachteil des zwingenden Schattenwurfs durch den Tragarm des Receivers, wie er bei Vollparaboloiden auftritt, vermieden werden.

Die erfindungsgemäß vorgesehene Kopplungseinrichtung kann als eine mechanische Kopplungseinrichtung ausgeführt sein. Diese kann Vorteile hinsichtlich hoher Robustheit und einfacher Wartbarkeit für sich verbuchen. Zudem verlangt sie nur wenig Aufwand, da es auch bei mehreren untereinander mechanisch gekoppelte Kollektoreinheiten ausreicht, wenn lediglich eine Antriebseinheit zum Verschwenken aller Kollektoreinheiten des Solarkollektors um ihre jeweiligen Schwenkachsen vorgesehen ist.

Es kann aber auch vorgesehen sein, dass die Kopplungseinrichtung als eine elektrische Kopplungseinrichtung ausgeführt ist. Hierbei erfolgt eine Gleichlaufsteuerung an den einzelnen Kollektoreinheiten, so dass sie sozusagen wie durch eine ,elektrische Welle' miteinander verkoppelt sind. Diese Ausführungsform verlangt zwar etwas größeren Aufwand hinsichtlich Antrieben und Steuerung, bietet aber eine größere Flexibilität hinsichtlich der relativen Aufstellung der einzelnen Kollektoreinheiten. Insbesondere brauchen sie nicht streng in Reihenform angeordnet zu sein, sondern können dem jeweiligen Gelände angepasst aufgestellt werden. Damit kann häufig eine höhere Flächennutzung und somit Ertragssteigerung erreicht werden. Es kann auch eine kombinierte Anordnung von elektrischer und mechanischer Kopplungseinrichtung vorgesehen sein.

Vorzugsweise ist die Kollektoreinheit zusätzlich an mindestens einem von der Schwenkachse entfernten Hebelpunkt um eine Hebelachse parallel zur Schwenkachse drehbar gelagert. Damit ist es ermöglicht, die Kollektoreinheit durch Veränderung der relativen Position der Hebelachse zur Schwenkachse zu verschwenken.

Die Kollektoreinheiten sind zweckmäßigerweise an einem Grundträger angeordnet. Er weist einen sonnennahen und einen sonnenfernen Teil auf, an dem jeweils mindestens eine Kollektoreinheit angeordnet ist. Mit Vorteil ist der Grundträger so ausgebildet, dass dessen sonnenferner Teil hochgesetzt ist in Relation zu dem sonnennahen Teil. Damit wird ein Ankippen des Grundträgers zur Sonne hin erreicht, woraus eine geringere Verschattung der sonnenferneren Kollektoreinheit resultiert. Damit kann bei Anordnung des Solarkollektors in höheren Breitengraden ein größerer Ertrag erzielt werden.

Um die mechanische Kopplung und das Verschwenken der einzelnen Kollektoreinheiten zu ermöglichen, kann vorgesehen sein, dass die Schwenkachsen der einzelnen Kollektoreinheiten an einem ersten Gerüst und die Hebelpunkte der einzelnen Kollektoreinheiten an einem zweiten Gerüst befestigt sind, wobei sich die beiden Gerüste entlang einer Ebene relativ zueinander verschieben lassen, so dass die damit verbundenen Kollektoreinheiten verschwenkt werden.

Es ist auch möglich, dass an der Schwenkachse jeder Kollektoreinheit ein fest mit den jeweiligen Spiegelelementen verbundenes, verwindungssteifes Metallrohr vorgesehen ist, welches vorzugsweise einen fest damit verbundenen Hebel zur Bildung des Lagers am Hebelpunkt aufweist. Durch einen entsprechenden Hebel an einem verwindungssteifen Metallrohr kann verhindert werden, dass Spannungen oder ähnliches aufgrund der Bewegung des Hebelpunktes relativ zur Schwenkachse in das Spiegelelement oder andere Elemente der Kollektoreinheit induziert werden. Vorzugsweise ist das verwindungssteife Metallrohr gegenüber dem Grundträger mittels einer Aufständerung derart hochgesetzt, dass die Kollektoreinheiten mit den halbparaboloiden Spiegelrinnen über die Waagrechte hinaus verschwenkbar sind. Damit kann die halbparaboloide Spiegelrinne soweit nach hinten verschwenkt werden, dass sie einer Sonnenbewegung über eine 90°-Elevation hinaus folgen kann. Der Solarkollektor eignet sich damit insbesondere für die Verwendung auch im äquatornahen Bereich (damit ist der Bereich zwischen den Wendekreisen gemeint), wo es regelmäßig zu Sonnenständen mit einer Elevation von mehr als 90° kommt. Ferner ist damit der Solarkollektor ertüchtigt für eine Anwendung auf geneigter Grundlage, wie beispielsweise eine dachparallele Aufstellung bei geneigten Dächern.

Alternativ ist es möglich, dass das Spiegelelement jeder Kollektoreinheit einen Anbindungspunkt zur Bildung des Lagers am Hebelpunkt aufweist. Das Spiegelelement muss in diesem Fall ausreichend verwindungssteif ausgeführt sein oder ggf. durch geeignete Mittel versteift werden.

Um Verwindungen des Spiegelelementes und/oder des Metallrohrs möglichst gering zu halten, kann vorgesehen sein, dass das Spiegelelement jeder Kollektoreinheit mehr als einen Hebelpunkt aufweist, wobei die Hebelpunkte vorzugsweise entlang der Hebelachse angeordnet sind. Indem die Kräfte für die Verschwenkung über die Länge des Spiegelelementes bzw. des Metallrohrs verteilt eingetragen werden, können Torsionsmomente um die Schwenkachse reduziert werden.

Die Receiverelemente können derart über einen oder mehrere Tragarme mit den Spiegelelementen verbunden sein, dass die Kollektoreinheit verschattungsfrei ist. Das bedeutet, dass bei Ausrichtung der Kollektoreinheiten zur Sonne hin der Strahlengang von der Sonne über das Spiegelelement zum Receiverelement nicht durch sonstige Elemente des erfindungsgemäßen Solarkollektors bspw. durch Schattenwurf gestört wird. Es ist weiter bevorzugt wenn an den Tragarmen und/oder Receiverelementen Justierungselemente vorgesehen sind, mit denen sich die Position der Receiverelemente gegenüber den jeweiligen Spiegelelementen einstellen lässt. Es kann so sichergestellt werden, dass sich die Receiverelemente in der korrekten Position gegenüber den Spiegelelementen befinden, um eine maximale Energieausbeute zu gewährleisten (Arbeitsposition). Erfindungsgemäß lassen sich die Kollektoreinheiten des erfindungsgemäßen Solarkollektors derart verschwenken, dass die den Receiverelementen zugewandte Seite der Spiegelelemente in eine witterungssichere Stellung verschwenkt werden kann. Als "witterungssichere Stellung" ist im Sinne dieser Erfindung eine solche Stellung gemeint, bei der Niederschlag nicht direkt auf die den Receiverelementen zugewandte Seite der Spiegelelemente auftreffen kann. Erfindungsgemäß sind die Receiverelemente über einen Tragarm an den Spiegelelementen befestigt, welcher zu den Spiegelelementen hin klappbar ausgestaltet ist. Das Volumen der Kombination aus Spiegelelementen, Tragarm und Receiverelementen kann dadurch verkleinert werden, was für die witterungssichere Stellung vorteilhaft ist. Es ist weiter bevorzugt, wenn die Spiegelelemente in der witterungsfesten Stellung auf Stützen abgelegt werden. Die Gefahr, dass die Spiegelelemente durch Windeintrag zu Schwingungen angeregt werden, wird dadurch reduziert.
Für die Klappbarkeit weisen die Tragarme der Receiverelemente jeweils ein Klappgelenk auf, welches von einer Sperreinrichtung in seiner Arbeitsposition gehaltert ist. Beim Schwenken in die witterungssichere Stellung nimmt das Klappgelenk seine eingeklappte Stellung ein. Im regulären Betrieb ist das Klappgelenk in seiner aufgeklappten Stellung, wodurch das Receiverelement in seiner Arbeitsposition steht. Um bei einem Schwenken der halbparaboloiden Spiegelrinne über die Waagrechte hinaus den Tragarm an einem unerwünschten Einklappen zu hindern, ist die Sperreinrichtung an dem Klappgelenk vorgesehen. Sie sichert auch in dieser Stellung das Klappgelenk in seiner aufgeklappten Stellung, so dass das Receiverelement zuverlässig in seiner Arbeitsposition steht. Zweckmäßigerweise ist es als eine hinreichend starke Feder ausgeführt. Alternativ kann auch eine lageabhängige Sperre vorgesehen sein, die so eingestellt ist, dass sie erst beim Einschwenken in die witterungsgeschützte Stellung freigegeben ist.

Es ist bevorzugt, wenn auf der den Receiverelementen abgewandten Seite der Spiegelelemente Fotovoltaikzellen vorgesehen sind. Mit diesen Fotovoltaikzellen kann auch in der witterungssicheren Stellung elektrische Energie gewonnen werden. Dies ist insbesondere zur Sicherung des Eigenbedarfs von Bedeutung, um so auch ohne Netzversorgung die Anlage betriebsfähig halten und ggf. wieder zu Stromerzeugung aufklappen zu können. Außerdem ist es möglich, mit entsprechenden Fotovoltaikzellen auch bei Nachführung der Kollektoreinheiten zur Sonne Streulicht in elektrische Energie umzuwandeln.

Um die Energieausbeute eines erfindungsgemäßen Solarkollektors gegebenenfalls weiter zu erhöhen, kann eine zweiachsige Nachführung vorgesehen sein.

Für eine entsprechende zweiachsige Nachführung kann ein um eine Achse nicht-parallel zur Schwenkachse drehbares Drehwerk, bspw. ein Drehkranz oder ein Drehteller vorgesehen sein, auf dem die Kollektoreinheiten angeordnet sind. Ferner kann vorgesehen sein, dass das Drehwerk vollschwenkbar (über mindestens 360 Grad) ausgeführt ist. Damit kann eine Azimutverstellung über 360 Grad oder mehr durchgeführt werden, so dass der Solarkollektor allein durch Verstellen des Azimutwinkels um 180 Grad einer überhöhten Elevation der Sonne über den 90 Grad Punkt hinaus folgen kann. Es ist dann nicht mehr erforderlich, dass die Kollektoreinheiten über die Waagrechte hinaus verschwenkbar ist, was insoweit zur Vereinfachung beiträgt. Als Antrieb kann vorgesehen sein, dass das Drehwerk an seinem äußeren Umfang ein umlaufendes Stahlseil aufweist, welches an wenigstens einer Stelle fest mit dem Drehwerk verbunden ist und zusätzlich um eine angetriebene Spule gewickelt ist, oder es kann ein ebenfalls an dem Außenumfang angreifender Zahnriemen als Antrieb vorgesehen sein. Alternativ kann das Drehwerk an seinem äußeren Umfang eine umlaufende Zahnstange, vorzugsweise aus Kunststoff, aufweisen, in die dann eine Antriebseinheit mit einem Zahnrad eingreifen kann.

Zweckmäßigerweise ist eine Aufständerung vorgesehen, so dass eine sonnenfernere der Kollektoreinheit hochgesetzt ist relativ zu einer sonnennäheren Kollektoreinheit. Damit wird eine unerwünschte Verschattung der sonnenfernen Kollektoreinheit durch die sonnennähere Kollektoreinheit verringert bzw. vermieden, wodurch sich ein vergrößerter Ertrag ergibt.

Das Drehwerk kann auf einer umlaufenden, kreisrunden Schiene geführt sein. Alternativ kann das Drehwerk durch ein zentrales Lager geführt sein. Das Lager ist dabei bevorzugt aus einem glatten Rohr und einem darauf gleitenden Rohr aus Gleitmaterial, vorzugsweise aus PTFE mit Kohle, gebildet. Die Versorgungsleitungen der Kollektoreinheiten sind bevorzugt über Drehdurchführungen im Bereich der Drehachse des Drehtellers geführt.

Der Solarkollektor kann bevorzugt eine Regelungseinrichtung aufweisen. Diese Regelungseinrichtung ist zum Ansteuern des Solarkollektors ausgebildet, insbesondere zur Nachführung der Kollektoreinheiten zur Sonne. Dazu kann ein Sonnenstandssensor vorgesehen sein. Außerdem kann ein Windgeschwindigkeits- und Windrichtungssensor vorgesehen sein. Die Regelungseinrichtung kann dann bei Feststellung von Starkwindverhältnissen den Solarkollektor in eine möglichst windsichere Position verfahren. Auch ist es möglich, dass ein Temperatursensor vorgesehen ist, über den die Temperatur im Bereich der Receiverelemente festgestellt werden kann. Übersteigt diese Temperatur einen vorgegebenen Wert, kann die Regelungseinrichtung die Kollektoreinheiten so verfahren, dass die auf die Spiegelelemente auftreffenden Sonnenstrahlen nicht mehr in den Receiverelementen gebündelt werden. Es wird so ein Schutz gegen Überhitzung erreicht.

Die Erfindung wird nun anhand von Ausführungsbeispielen unter Bezugnahme auf die beigefügten Zeichnungen weiter erläutert. Es zeigen:
- Figur 1: ein erstes Ausführungsbeispiel eines erfindungsgemäßen Solarkollektors;
- Figur 2: ein zweites Ausführungsbeispiel eines erfindungsgemäßen Solarkollektors;
- Figur 3: ein drittes Ausführungsbeispiel eines erfindungsgemäßen Solarkollektors;
- Figur 4: ein Detail des Ausführungsbeispiels aus Figur 3;
- Figur 5a-c: Detaillösungen und -alternativen zum Ausführungsbeispiel aus Figur 3;
- Figur 6: eine Variante zu dem dritten Ausführungsbeispiel gemäß Fig. 3;
- Figur 7: ein viertes Ausführungsbeispiel mit einer Aufständerung;
- Figur 8: ein fünftes Ausführungsbeispiel mit einem Drehmodul; und
- Figur 9a-c: Detailansichten zu einer Sperreinrichtung;
- Figur 10a, b: ein sechstes Ausführungsbeispiel mit einem über die Waagrechte hinaus geschwenkten Spiegel.

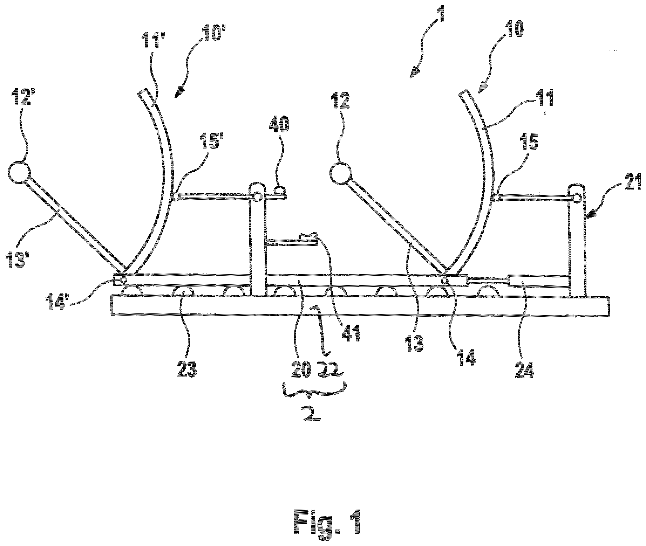

In Figur 1 ist ein erstes Ausführungsbeispiel eines erfindungsgemäßen Solarkollektors 1 dargestellt. Der Solarkollektor 1 umfasst eine erste Kollektoreinheit 10 mit einem Spiegelelement 11 und einem Receiverelement 12. Das Receiverelement 12 ist im Fokus des Spiegelelements 11 angeordnet und wird dort mithilfe eines Tragarms 13 gehalten. Bei dem Spiegelelement 11 handelt es sich um eine halbparaboloide Spiegelrinne mit einer Brennlinie als Fokus, wobei das Receiverelement 12 lang gestreckt entlang dieser Brennlinie ausgebildet ist.

Die Kollektoreinheit 10 umfassend Spiegelelement 11 und Receiverelement 12 ist um eine Schwenkachse 14 schwenkbar gelagert, wobei die Schwenkachse 14 entlang einer Kante des Spiegelelements 11 verläuft. Darüber hinaus ist die Kollektoreinheit 10 noch an einem Hebelpunkt 15 drehbar gelagert, wobei die Drehbarkeit am Hebelpunkt 15 um eine Hebelachse parallel zur Schwenkachse 14 ausgebildet ist. Die Kollektoreinheit 10 lässt sich durch Änderung der relativen Position des Hebelpunktes 15 gegenüber der Schwenkachse 14 verschwenken, d. h. hinsichtlich der Elevation nachführen.

Der Solarkollektor 1 umfasst eine weitere Kollektoreinheit 10' auf einem gemeinsamen Grundträger 2. Diese weitere Kollektoreinheit 10' entspricht im Wesentlichen der zuvor beschriebenen ersten Kollektoreinheit 10, weshalb auf die dortigen Ausführungen verwiesen wird. Die einzelnen Elemente der weiteren Kollektoreinheit 10' tragen dabei im Wesentlichen die gleichen Bezugsziffern wie die vergleichbaren der ersten Kollektoreinheit 10, ergänzt um einen Strich. Die beiden Kollektoreinheiten 10, 10' sind dabei so angeordnet, dass ihre jeweiligen Schwenkachsen 14, 14' parallel und voneinander beabstandet angeordnet sind.

Bei dem Ausführungsbeispiel in Figur 1 umfasst der Grundträger 2 ein erstes Gerüst 20 und ein zweites Gerüst 22. Hierbei sind die Schwenkachsen der beiden Kollektoreinheiten 10, 10' mit einem ersten Gerüst 20, die Hebelpunkte 15, 15' der beiden Kollektoreinheiten 10, 10' über geeignete Stützen 21 mit einem zweiten Gerüst 22 verbunden. Das erste Gerüst 20 ist mithilfe von Rollen 23 gleitend auf dem zweiten Gerüst 22 gelagert und kann mithilfe der Antriebseinheit 24 gegenüber diesem entlang einer Ebene verschoben werden. Durch ein Verschieben des ersten Gerüstes 20 gegenüber dem zweiten Gerüst 22 wird die Position der Hebelpunkte 15, 15' gegenüber den Schwenkachsen 14, 14' verändert. Die Kollektoreinheiten 10, 10' werden so verschwenkt.

Der Solarkollektor 1 aus Figur 1 weist weiterhin Auflagen 40, 41 auf, auf denen das Spiegelelement 11 und das Receiverelement 12 für eine witterungssichere Position abgelegt werden können, sodass kein Niederschlag direkt auf die reflektierenden Flächen des Spiegelelementes 11 auftreffen kann. Dazu wird die Kollektoreinheit 10 so weit verschwenkt, dass das Spiegelelement 11 auf der Auflage 40 aufliegt. Der Tragarm 13, mit dem das Receiverelement 12 relativ zum Spiegelelement 11 gehalten wird, ist zum Spiegelelement 11 hin abklappbar, so dass das Spiegelelement 11 noch weiter in Richtung der Auflage 40 verschwenkt werden kann, auch wenn der Receiver 12 bereits auf der Auflage 41 aufliegt. Auch für die weitere Kollektoreinheit 10' können entsprechende Auflagen 40, 41 vorgesehen sein.

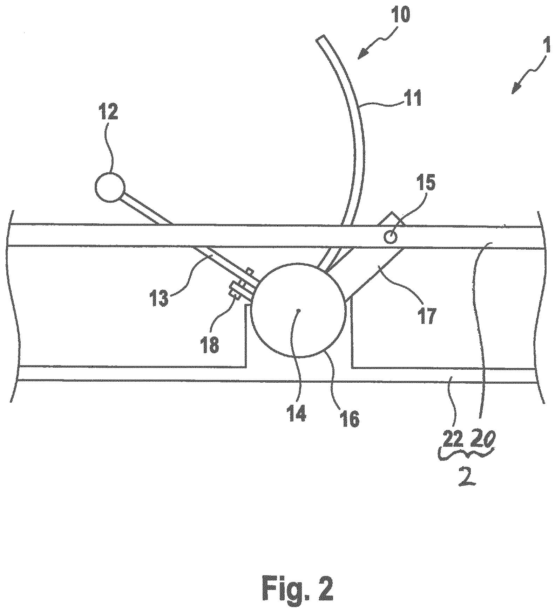

In Figur 2 ist ein zweites Ausführungsbeispiel eines erfindungsgemäßen Solarkollektors 1 gezeigt, wobei lediglich eine erste Kollektoreinheit 10 dargestellt ist. Die weiteren Kollektoreinheiten 10' sind vergleichbar ausgestaltet und über den Grundträger 2 mit den Gerüsten 20, 22 an die erste Kollektoreinheit 10 angebunden. Die Anbindung ist dabei identisch zu derjenigen aus Figur 1, weshalb auf die dortigen Ausführungen verwiesen wird.

Die Kollektoreinheit 10 ist ebenfalls um eine Schwenkachse 14 verschwenkbar, wobei die Schwenkachse 14 entlang einer Kante des als halbparaboloide Spiegelrinne ausgebildeten Spiegelelements 11 verläuft und das Receiverelement 12 über einen Tragarm 13 relativ zum Spiegelelement 11 in dessen Brennlinie gehalten wird. Der Tragarm 13 kann wie beim Ausführungsbeispiel aus Figur 1 ausgestaltet sein.

Entlang der Schwenkachse 14 ist ein verbindungssteifes Metallrohr 16 vorgesehen, mit dem das Spiegelelement 11 und der Tragarm 13 verbunden sind. An dem Metallrohr 16 ist ein Hebel 17 vorgesehen, an dem ein Lager für den Hebelpunkt 15 ausgebildet ist. Durch Verschieben dieses Hebelpunktes 15 gegenüber der Schwenkachse 14 wird das Metallrohr 16 gedreht, wodurch die damit verbundene Kollektoreinheit 10 verschwenkt wird.

Zur Feinjustierung der Position des Receivers 12 gegenüber dem Spiegelelement 11 ist eine Justierschraube 18 zur Einstellung der Winkellage vorgesehen, mit der die Position des Tragarms 13 so nachgestellt werden kann, dass sich der Receiver 12 in der Brennlinie des Spiegelelementes 11 befindet.

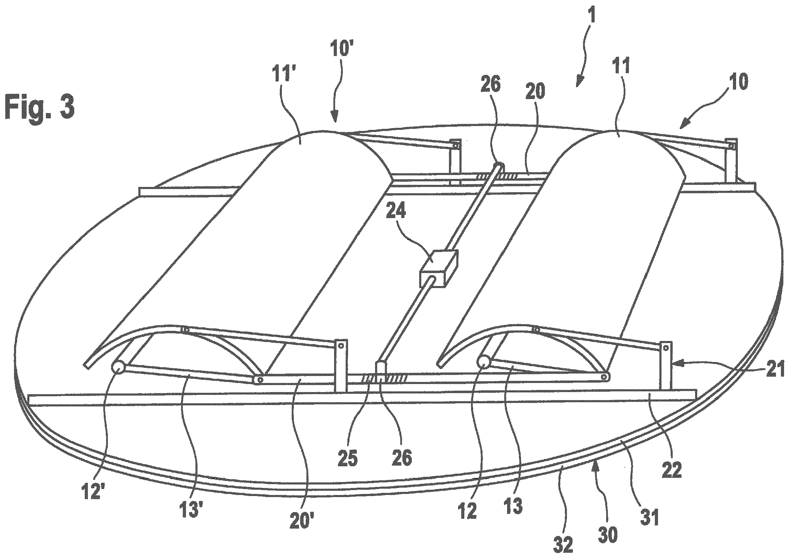

In Figur 3 ist ein drittes Ausführungsbeispiel eines erfindungsgemäßen Solarkollektors 1 dargestellt, wobei der Solarkollektor 1 in eine witterungssichere Stellung verfahren ist, bei der die Tragarme 13, 13' gegenüber den Spiegelelementen 11, 11' abgeklappt sind. Das Ausführungsbeispiel aus Figur 3 ist vergleichbar mit demjenigen aus Figur 1, weshalb auf die dortigen Erläuterungen verwiesen wird. Im Folgenden wird lediglich auf Unterschiede und Besonderheiten gegenüber dem Ausführungsbeispiel aus Figur 1 eingegangen.

Bei dem dargestellten Ausführungsbeispiel ist zu beiden Seiten der Spiegelelemente 11, 11' jeweils ein erstes Gerüst 20 und ein zweites Gerüst 22 vorgesehen. Die ersten Gerüste 20 weisen dabei jeweils einen Gewindebereich 25 auf, an dem jeweils über ein Gewinde 26 eine gemeinsame Antriebseinheit 24 angreift. Indem die beiden ersten Gerüste 20 durch eine einzelne, gemeinsame Antriebseinheit 24 bewegt werden, ist ein synchrones Verfahren der ersten Gerüste 20 gegenüber den zweiten Gerüsten 22 gewährleistet. Verwindungsmomente in den Kollektoreinheiten 10, 10' können so vermieden werden.

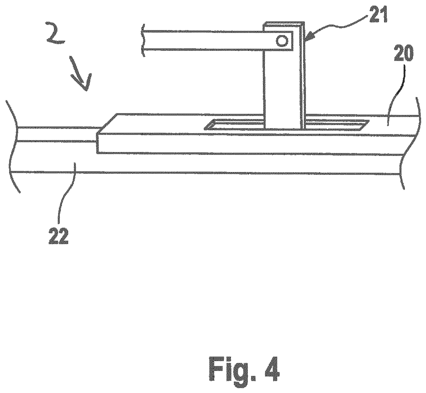

In Figur 4 ist dargestellt, wie ein erstes Gerüst 20 auf einem zweiten Gerüst 22 geführt werden kann. Dazu sind in dem ersten Gerüst 20 Ausnehmungen vorgesehen, durch die die Stützen 21, die am zweiten Gerüst 22 befestigt sind hindurchgeführt werden. Es kann so eine seitliche Führung des ersten Gerüstes 20 auf dem zweiten Gerüst 22 gewährleistet werden.

Bei dem Ausführungsbeispiel in Figur 3 sind die zweiten Gerüste 22 des Solarkollektors 1 auf einem Drehwerk 30 angeordnet. Mithilfe dieses Drehwerkes 30, welches als Drehkranz ausgeführt ist, lassen sich die zweiten Gerüste 22 und damit die daran befestigten Kollektoreinheiten 10, 10' um eine Achse senkrecht zu den Schwenkachsen 14, 14' der Kollektoreinheiten 10, 10' drehen. Durch das Verschwenken der Kollektoreinheiten 10, 10' einerseits und das Drehen derselben um die Drehachse des Drehwerks 30 andererseits wird eine zweiachsige Nachführung erreicht.

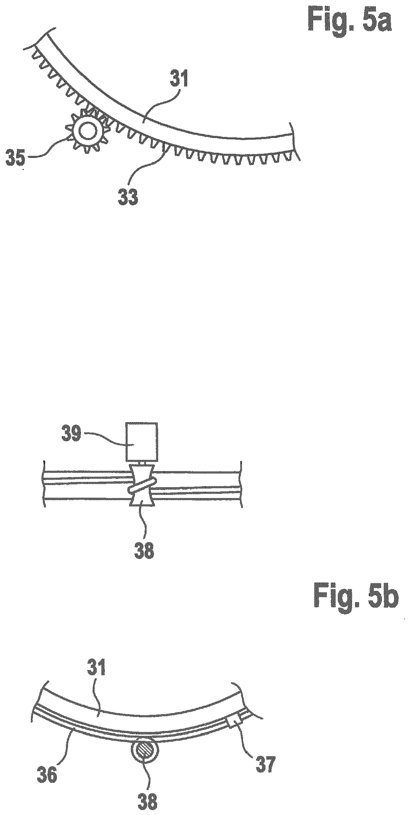

Das Drehwerk 30 weist zwei gegeneinander verschiebbare Ringe 31, 32 auf, die in Relation so zueinander geführt werden, das die gewünschte Drehbewegung erreicht werden kann. Ist der eine Ring 31 fest mit den zweiten Gerüsten 22 verbunden, während der andere Ring 32 mit einem Fundament oder beispielsweise einem Dach verbunden ist, kann der erste Ring 31 an seinem äußeren Umfang eine umlaufende Zahnstange 33 aus Kunststoff aufweisen, in welche eine Antriebseinheit mit einem Zahnrad 35 eingreifen kann. Ein entsprechender Antrieb für das Drehwerk 30 ist in Figur 5a skizziert.

Alternativ ist es möglich, dass der erste Ring 31 ein umlaufendes Stahlseil 36 aufweist, das an einer Stelle 37 fest mit dem ersten Ring 31 verbunden ist. Zusätzlich ist das Stahlseil 36 um eine Spule 38 gewickelt, die von einer Antriebseinheit 39 angetrieben wird. Ein entsprechender Antrieb für das Drehwerk 30 ist in Figur 5b skizziert.

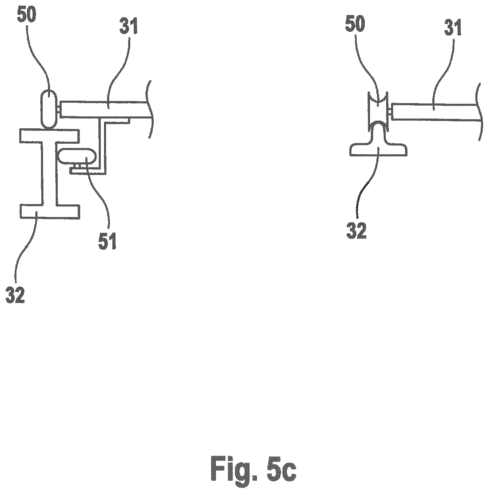

In Figur 5c sind Alternativen skizziert, wie die Führung der beiden Ringe 31, 32 des Drehwerks 30 aufeinander geführt werden können. Einerseits ist es möglich, eine Laufrolle 50 und eine Führungsrolle 51 an dem einem Ring 31 vorzusehen, die dann auf dem anderen Ring 32 laufen. Alternativ ist es möglich, den anderen Ring 32 profiliert auszugestalten, so dass eine ebenfalls profilierte Laufrolle 50 in dieses Profil eingreift. In beiden dargestellten Fällen ist es möglich, dass das Drehwerk 30 nur nicht horizontal, sondern auch geneigt angeordnet ist. Es ist also beispielsweise möglich, einen entsprechend ausgestalteten Solarkollektor 1 dachparallel auf einem schrägen Dach anzuordnen.

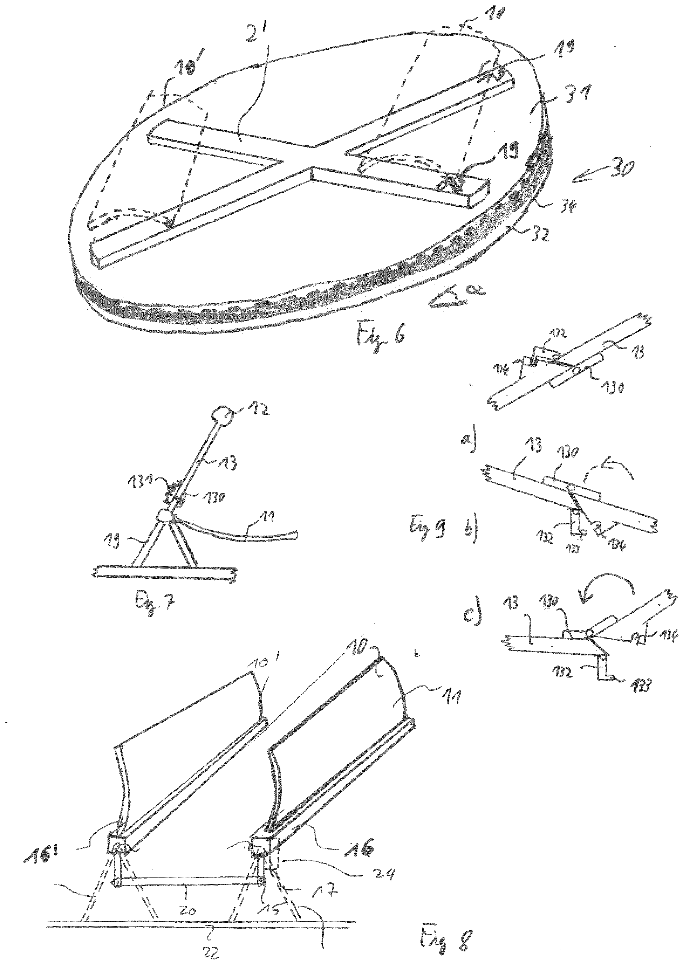

In Figur 6 ist ein Ausführungsbeispiel dargestellt, welches einen alternativen X-förmigen Grundträger 2' für zwei Kollektoreinheiten 10, 10' aufweist. Die Kollektoreinheiten 10, 10' mit ihren Enden auf den Endstücken des X-förmigen Grundträgers 2' angeordnet, wobei der sonnenferne der Kollektoreinheiten 10 mittels einer Aufständerung 19 hochgesetzt ist. Damit ist dessen Verschattung durch die sonnennähere Kollektoreinheit 10' verringert. Es versteht sich, dass diese Art der Aufständerung 19 nur im hinteren, sonnenfernen Teil auch bei den übrigen Ausführungsformen eingesetzt werden kann.
Weiter ist in Figur 6 ein alternativer Antrieb dargestellt. Er umfasst einen Zahnriemen 34, der am äußeren Rand des Rings 31 umläuft. Der Ring 31 ist mit dem Zahnriemen 34 um einen Winkelbereich von über 360 Grad schwenkbar, so dass beliebige Positionen aus jeder Stellung direkt angefahren werden können. Weiter kann durch eine Drehung um 180 Grad eine korrekte Einstellung der Kollektoreinheiten 10, 10' auch dann erreicht werden, wenn die Sonne einen Elevationswinkel von 90 Grad überschreitet. Im übrigen ist der Antrieb ähnlich zu dem in Fig. 3 und 5 dargestellten und es wird auf die dortigen Erläuterungen verwiesen. Der Drehantrieb 30 ist in seiner Gesamtheit verkippt um einen Winkel α, so dass er eine schiefe Ebene bildet. Die Fig. 7 stellt ein Ausführungsbeispiel von einen Tragarm 13 mit einem Klappgelenk 130 dar. Damit ist ein Anklappen des Tragarms 13 beim Übergang des Spielelements 11 in seine Wetterschutzstellung (s. Fig. 3) ermöglicht. Zur Sicherung des Tragarms 13 gegenüber einem unerwünschten Abklappen ist eine Feder 131 als Sperreinrichtung vorgesehen. Sie ist so bemessen, dass sie die Gewichtskraft des Tragarms 13 mit dem Receiverelement 12 sowie die darauf einwirkenden Windkräfte und weitere auftretende Kräfte hält. Erst wenn beim Einklappen der Tragarm 13 seine Wetterschutzstellung erreicht, wird die Feder 131 überdrückt und der Tragarm 13 kann an dem Klappgelenk 130 einklappen, um die in Fig. 3 dargestellte Stellung zu erreichen.
Eine alternative Ausführungsform der Sperreinrichtung ist in Fig. 9a-c dargestellt. Sie umfasst ein als Masseverschluss ausgeführtes lageabhängiges Sperrelement 132. Es ist schwenkbar an dem receiverseitigen Teil des Tragarms 13 angeordnet und weist an seinem freien Ende eine Rastnase 133 auf. Sie ist dazu ausgebildet, in eine komplementär geformte Rastausnehmung 134 an dem lagerseitigen Teil des Tragarms 13 einzugreifen, wenn sich der Tragarm 13 in seiner aufgeklappten Position befindet (s. Fig. 9a). Damit ist Tragarm 13 formschlüssig verriegelt für alle Betriebsstellungen, in denen das Spiegelelement 11 auf die Sonne ausgerichtet ist. Beim Übergang in die Wetterschutzstellung löst das Sperrelement 132 beim Überschreiten einer bestimmten Stellung (s. Fig. 9b) aus, indem die Rastnase 133 aufgrund der Schwerkraft aus der Ausnehmung 134 bewegt wird. Die Sperrwirkung ist damit aufgehoben. Erreicht der Tragarm 13 schließlich seine Wetterschutzstellung (s. Fig. 3), so wird er an seinem Klappgelenk 130 abgeklappt (s. Fig. 9c).

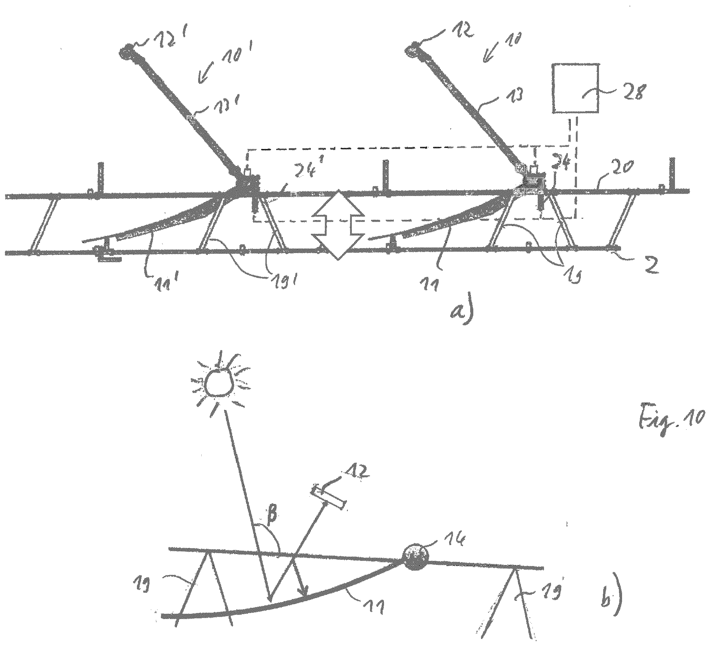

Bei dem in Fig. 10 dargestellten Ausführungsbeispiel ist eine elektrische Kopplungseinrichtung vorgesehen. An den Kollektoreinheiten 10, 10' ist je eine Antriebseinheit 24, 24' vorgesehen. Sie sind angeschlossen an ein Gleichlaufsteuermodul 28, welches die Antriebseinheiten 24 betätigt. Durch synchrone Ansteuerung wird somit eine gekoppelte Verstellung der Kollektoreinheiten 10, 10' erreicht, als ob sie über eine ,elektrischen Welle' miteinander verkoppelt seien. Es kann auch vorgesehen sein, die elektrische Kopplung mit der mechanischen Kopplung zu kombinieren. Dies ist in Fig. 8 dargestellt. Dabei ist für mehrere in Reihe angeordnete Kollektoreinheiten eine gemeinsame Antriebseinheit 24 vorgesehen, und die von ihr betätigten Kollektoreinheiten 10, 10' sind über Koppelstangen 20 miteinander verbunden, wie vorstehend detailliert in Bezug auf Fig. 1 und 2 erläutert.

Bei besonders hohen Ansprüchen an die Synchronisierung, beispielsweise zum Ausgleich von erheblichen Windlasten o.ä., die ggf. ungleichmäßig auf die Kollektoreinheiten 10, 10' wirken, kann optional eine Rückmeldeschleife vorgesehen sein. Sie umfasst Positionsencoder 27 an den einzelnen Kollektoreinheiten, die den Schwenkzustand der jeweiligen Kollektoreinheit 10, 10' ermitteln und als Eingangssignal an das Gleichlaufsteuermodul 28 anlegen. Dies kann dann selbsttätig bei Bedarf die Antriebseinheiten selektiv ansteuern, um die Position der Spiegelelemente 11 so feineinzustellen.

Weiter ist in Fig. 10 ein Aufständerung der Kollektoreinheiten 10, 10' dargestellt. Das erste Gerüst 20 ist durch die Ständer 19 nach oben versetzt (visualisiert durch den Doppelpfeil in Fig. 10a). Damit ist auch die Schwenkachse 14 nach oben versetzt. Es wird so Raum gewonnen, um die Spiegel 11 der Kollektoreinheiten 10, 10' über die Waagrechte hinaus zu verstellen, wobei der Spiegel 11 eine Position unterhalb der Schwenkachse 14 einnimmt. Damit kann er der Sonne auch bei einem Elevationswinkel ß von über 90 Grad noch folgen. Der Solarkollektor ist damit besonders für die Aufstellung im äquatornahen Bereich zwischen den Wendekreisen geeignet.

## Patentansprüche

1. Solarkollektor (1) umfassend eine erste, um eine Schwenkachse (14) schwenkbar gelagerte Kollektoreinheit (10) mit einem Spiegelelement (11) und einem mit dem Spiegelelement (11) verbundenen, im Fokus des Spiegelelementes (11) angeordneten Receiverelement (12), wobei wenigstens eine weitere Kollektoreinheit (10') entsprechend der ersten Kollektoreinheit (10) vorgesehen ist, wobei die Spiegelelemente (11, 11') der ersten und der weiteren Kollektoreinheiten (10, 10') halbparaboloide Spiegelrinnen mit einer Brennlinie als Fokus sind und sich die Receiverelemente (12, 12') der Kollektoreinheiten (10, 10') jeweils entlang der Brennlinie der jeweiligen Spiegelrinnen (11, 11'), parallel zur jeweiligen Schwenkachse (14, 14') erstrecken, wobei die Schwenkachsen (14, 14') der ersten und der weiteren Kollektoreinheiten (10, 10') parallel und in Richtung senkrecht zu den Schwenkachsen (14 , 14') beabstandet angeordnet sind, wobei die Schwenkachse (14) der jeweiligen Kollektoreinheit (10, 10') entlang einer Kante des Spiegelelementes (11, 11') verläuft, wobei sich die Kollektoreinheiten (10, 10') derart verschwenken lassen, dass die den Receiverelementen (12, 12') jeweils zugewandte Seite der Spiegelelemente (11, 11') in eine witterungssichere Stellung verschwenkt werden kann, und wobei das jeweilige Receiverelement (12, 12') an einem Tragarm (13, 13') angeordnet ist, welcher zu dem Spiegelelement (11, 11') hin klappbar ist, **dadurch gekennzeichnet, dass** die ersten und die weiteren Kollektoreinheiten (10, 10') jeweils derart über eine Kopplungseinrichtung gekoppelt sind, dass ein Verschwenken der ersten Kollektoreinheit (10) zu einem synchronen Verschwenken der weiteren Kollektoreinheiten (10') führt, und dass der Tragarm (13, 13') ein Klappgelenk (130) aufweist, das ein Abklappen des Tragarms (13, 13') beim Übergang in die witterungssichere Stellung ermöglicht, wobei an dem Klappgelenk (130) eine Sperreinrichtung (131, 132) vorgesehen ist, die ein unerwünschtes Einklappen des Tragarms (13, 13') verhindert, für alle Betriebsstellungen in denen das Spiegelelement (11, 11') auf die Sonne ausgerichtet ist.

2. Solarkollektor nach Anspruch 1, **dadurch gekennzeichnet, dass** die Kollektoreinheit (10) zusätzlich an mindestens einem von der Schwenkachse (14) entfernten Hebelpunkt (15) um eine Hebelachse parallel zur Schwenkachse (14) drehbar gelagert ist, so dass die Kollektoreinheit (10) durch Veränderung der relativen Position der Hebelachse zur Schwenkachse (14) verschwenkt wird.

3. Solarkollektor nach Anspruch 1 oder 2, **dadurch gekennzeichnet, dass** die Kopplungseinrichtung als eine mechanische Kopplungseinrichtung (20) ausgeführt ist.

4. Solarkollektor nach Anspruch 1 oder 2, **dadurch gekennzeichnet, dass** die Kopplungseinrichtung als eine elektrische Kopplungseinrichtung (24, 28) ausgeführt ist.

5. Solarkollektor nach einem der vorangehenden Ansprüche, **dadurch gekennzeichnet, dass** die Kollektoreinheiten (10, 10') auf einem Grundträger (2, 2') so angeordnet sind und dass eine sonnenfernere der Kollektoreinheiten (10, 10') hochgesetzt ist in Relation zu einer sonnennäheren der Kollektoreinheiten (10, 10').

6. Solarkollektor nach einem der Ansprüche 2 bis 5, **dadurch gekennzeichnet, dass** die Schwenkachsen (14, 14') der einzelnen Kollektoreinheiten (10, 10') an einem ersten Gerüst (20) und die Hebelpunkte (15, 15') der einzelnen Kollektoreinheiten (10, 10') an einem zweiten Gerüst (22) befestigt sind, wobei sich die beiden Gerüste (20, 22) entlang einer Ebene relativ zueinander verschieben lassen, sodass die Kollektoreinheiten (10, 10') verschwenkt werden.

7. Solarkollektor nach einem der Ansprüche 2 bis 6, **dadurch gekennzeichnet, dass** an der Schwenkachse (14, 14') jeder Kollektoreinheit (10, 10') ein fest mit dem jeweiligen Spiegelelement (11, 11') verbundenes verwindungssteifes Metallrohr (16) vorgesehen ist, welches vorzugsweise einen fest damit verbunden Hebel (17) zur Bildung des Lagers am Hebelpunkt (15, 15') aufweist.

8. Solarkollektor nach Anspruch 7, **dadurch gekennzeichnet, dass** das verwindungssteife Metallrohr (16) gegenüber dem Grundträger mittels einer Aufständerung (19) derart hochgesetzt ist, dass die Kollektoreinheiten (10, 10') mit den halbparaboloiden Spiegelrinnen (11, 11') über die Waagrechte hinaus verschwenkbar sind.

9. Solarkollektor nach einem der vorangehenden Ansprüche, **dadurch gekennzeichnet, dass** die Sperreinrichtung (131, 132) vorzugsweise als Feder ausgebildet ist.

10. Solarkollektor nach einem der Ansprüche 2 bis 9, **dadurch gekennzeichnet, dass** das Spiegelelement (11, 11') jeder Kollektoreinheit (10, 10') einen Anbindungspunkt zur Bildung des Lagers am Hebelpunkt (15, 15') aufweist.

11. Solarkollektor nach einem der vorhergehenden Ansprüche, **dadurch gekennzeichnet, dass** auf der den Receiverelementen (12, 12') abgewandten Seite der Spiegelelemente (11, 11') Fotovoltaikzellen angeordnet sind.

12. Solarkollektor nach einem der Ansprüche 5 bis 11, **dadurch gekennzeichnet, dass** ein um eine Achse nicht-parallel zur Schwenkachse (14, 14') drehbares Drehwerk (30) vorgesehen ist, auf dem der Grundträger (2) angeordnet ist.

13. Solarkollektor nach Anspruch 12, **dadurch gekennzeichnet, dass** das Drehwerk (30) so aufgeständert ist, dass es eine schiefe Ebene (a) bildet und die sonnenferne Kollektoreinheit (10) hochgesetzt ist relativ zu einer sonnennäheren Kollektoreinheit (10').

14. Solarkollektor nach Anspruch 12 oder 13, **dadurch gekennzeichnet, dass** der Grundträger als ein X-förmiger Träger (2') ausgebildet ist, an dessen Enden jeweils eine Seite der Kollektoreinheiten (10, 10') angeordnet ist.

15. Solarkollektor nach einem der Ansprüche 12 bis 14, **dadurch gekennzeichnet, dass** das Drehwerk (30) vollschwenkbar über mindestens volle 360 Grad ausgeführt ist, wobei als Antrieb vorgesehen ist ein an dem Außenumfang des Drehwerks (30) angreifender Zahnriemen (34) oder ein umlaufendes Stahlseil (36), welches an wenigstens einer Stelle (37) fest mit dem Drehwerk (30) verbunden ist und um eine angetriebene Spule (38) gewickelt ist, oder das Drehwerk (30) an seinem äußeren Umfang eine umlaufende Zahnstange (33), vorzugsweise aus Kunststoff, aufweist, in die eine Antriebeinheit mit einem Zahnrad (35) eingreift.

16. Solarkollektor nach einem der Ansprüche 12 bis 15, **dadurch gekennzeichnet, dass** die Versorgungsleitungen der Kollektoreinheit(en) (10, 10') über Drehdurchführungen im Bereich der Drehachse des Drehwerks (30) geführt sind.

## Claims

1. Solar collector (1) comprising a first collector unit (10) which is pivotably mounted about a pivot axis (14) and has a mirror element (11) and a receiver element (12) connected to the mirror element (11) and arranged in the focus of the mirror element (11), wherein at least one further collector unit (10') corresponding to the first collector unit (10) is provided, wherein the mirror element (11, 11') of the first and of the further collector units (10, 10') are semi-paraboloid mirror troughs having a focus line as focus and the receiver elements (12, 12') of the collector units (10, 10') each extend along the focus line of the respective mirror troughs (11, 11'), parallel to the respective pivot axis (14, 14'), wherein the pivot axes (14, 14') of the first and of the further collector units (10, 10') are arranged parallel and spaced apart in the direction perpendicular to the pivot axes (14, 14'), wherein the pivot axis (14) of the respective collector unit (10, 10') runs along an edge of the mirror element (11, 11'), wherein the collector units (10, 10') can be pivoted in such a way that the side of the mirror elements (11, 11') that respectively faces the receiver elements (12, 12') can be pivoted into a weather-protected position, and wherein the respective receiver element (12, 12') is arranged on a support arm (13, 13') which can be swivelled towards the mirror element (11, 11'), **characterized in that** the first and the further collector units (10, 10') are each coupled via a coupling device in such a way that a pivoting of the first collector unit (10) leads to a synchronous pivoting of the further collector units (10'), and **in that** the support arm (13, 13') has a swivel joint (130) which allows the support arm (13, 13') to be swivelled down during transfer into the weather-protected position, wherein a blocking device (131, 132) is provided on the swivel join (130) and prevents the support arm (13, 13') from being swivelled in in an undesired manner, for all operating positions in which the mirror element (11, 11') is oriented towards the sun.

2. Solar collector according to Claim 1, **characterized in that** the collector unit (10) is additionally mounted at at least one lever point (15) remote from the pivot axis (14) so as to be rotatable about a lever axis parallel to the pivot axis (14), with the result that the collector unit (10) is pivoted by changing the relative position of the lever access with respect to the pivot axis (14) .

3. Solar collector according to Claim 1 or 2, **characterized in that** the coupling device is configured as a mechanical coupling device (20).

4. Solar collector according to Claim 1 or 2, **characterized in that** the coupling device is configured as an electrical coupling device (24, 28) .

5. Solar collector according to one of the preceding claims, **characterized in that** the collector units (10, 10') are arranged on a base carrier (2, 2') in such a way that one of the collector units (10, 10') which is farther from the sun is raised in relation to one of the collector units (10, 10') which is closer to the sun.

6. Solar collector according to one of Claims 2 to 5, **characterized in that** the pivot axes (14, 14') of the individual collector units (10, 10') are fastened to a first framework (20) and the lever points (15, 15') of the individual collector units (10, 10') are fastened to a second framework (22), wherein the two frameworks (20, 22) can be displaced relative to one another along a plane, with the result that the collector units (10, 10') are pivoted.

7. Solar collector according to one of Claims 2 to 6, **characterized in that** a torsionally rigid metal tube (16) which is fixedly connected to the respective mirror element (11, 11') is provided on the pivot axis (14, 14') of each collector unit (10, 10') and preferably has a lever (17) fixedly connected to said tube in order to form the bearing at the lever point (15, 15').

8. Solar collector according to Claim 7, **characterized in that** the torsionally rigid metal tube (16) is raised with respect to the base carrier by means of a stand (19) in such a way that the collector units (10, 10') with the semi-paraboloid mirror troughs (11, 11') can be pivoted beyond the horizontal.

9. Solar collector according to one of the preceding claims, **characterized in that** the blocking device (131, 132) is preferably designed as a spring.

10. Solar collector according to one of Claims 2 to 9,**characterized in that** the mirror element (11, 11') of each collector unit (10, 10') has an attachment point for forming the bearing at the lever point (15, 15').

11. Solar collector according to one of the preceding claims, **characterized in that** photovoltaic cells are arranged on the side of the mirror elements (11, 11') that faces away from the receiver elements (12, 12').

12. Solar collector according to one of Claims 5 to 11, **characterized in that** a rotary unit (30) which can be rotated about an axis non-parallel to the pivot axis (14, 14') is provided, on which rotary unit the base carrier (2) is arranged.

13. Solar collector according to Claim 12, **characterized in that** the rotary unit (30) is supported in such a way that it forms an inclined plane (α) and the collector unit (10) which is far from the sun is raised relative to a collector unit (10') which is closer to the sun.

14. Solar collector according to Claim 12 or 13, **characterized in that** the base carrier is designed as an X-shaped carrier (2') at each of whose ends one side of the collector units (10, 10') is arranged.

15. Solar collector according to one of Claims 12 to 14, **characterized in that** the rotary unit (30) is configured to be completely pivotable over at least a full 360 degrees, wherein the drive provided is a toothed belt (34) which acts on the outer circumference of the rotary unit (30) or a peripheral steel cable (36) which is fixedly connected to the rotary unit (30) at at least one point (37) and is wound around a driven spool (38), or the rotary unit (30) has at its outer circumference a peripheral rack (33), preferably made of plastic, in which a drive unit having a toothed wheel (35) engages.

16. Solar collector according to one of Claims 12 to 15, **characterized in that** the supply lines of the collector unit(s) (10, 10') are guided via rotary leadthroughs in the region of the axis of rotation of the rotary unit (30).

## Revendications

1. Collecteur solaire (1), comprenant une première unité de collecteur (10) supportée de manière à pouvoir pivoter autour d'un axe de pivotement (14), avec un élément de miroir (11) et un élément récepteur (12) connecté à l'élément de miroir (11) et disposé dans le foyer de l'élément de miroir (11), au moins une unité de collecteur supplémentaire (10') étant prévue de manière correspondant à la première unité de collecteur (10), les éléments de miroir (11, 11') de la première et de l'autre unité de collecteur (10, 10') étant des miroirs en forme de canaux en demi-parabole dont le foyer est une ligne focale et les éléments récepteurs (12, 12') des unités de collecteur (10, 10') s'étendant à chaque fois le long de la ligne de foyer des miroirs en forme de canaux respectifs (11, 11'), parallèlement à l'axe de pivotement respectif (14, 14'), les axes de pivotement (14, 14') de la première et de l'autre unité de collecteur (10, 10') étant disposés parallèlement et à distance dans la direction perpendiculaire aux axes de pivotement (14, 14'), l'axe de pivotement (14) de l'unité de collecteur respective (10, 10') s'étendant le long d'un bord de l'élément de miroir (11, 11'), les unités de collecteur (10, 10') pouvant être pivotées de telle sorte que le côté des éléments de miroir (11, 11') à chaque fois tourné vers les éléments récepteurs (12, 12') puisse être pivoté dans une position protégée contre les intempéries, et l'élément récepteur respectif (12, 12') étant disposé au niveau d'un bras de support (13, 13') qui peut être rabattu vers l'élément de miroir (11, 11'), **caractérisé en ce que** les premières et les autres unités de collecteur (10, 10') sont à chaque fois accouplées par le biais d'un dispositif d'accouplement de telle sorte qu'un pivotement de la première unité de collecteur (10) entraîne un pivotement synchrone des autres unités de collecteur (10'), et **en ce que** le bras de support (13, 13') présente une articulation de rabattement (130) qui permet un rabattement du bras de support (13, 13') lors de la transition dans la position protégée contre les intempéries, un dispositif de blocage (131, 132) étant prévu au niveau de l'articulation de rabattement (130), lequel empêche un rabattement indésirable du bras de support (13, 13') pour toutes les positions de fonctionnement dans lesquelles l'élément de miroir (11, 11') est orienté vers le soleil.

2. Collecteur solaire selon la revendication 1, **caractérisé en ce que** l'unité de collecteur (10) est en outre supportée à rotation sur au moins un point de levier (15) éloigné de l'axe de pivotement (14) autour d'un axe de levier parallèle à l'axe de pivotement (14), de telle sorte que l'unité de collecteur (10) soit pivotée par variation de la position relative de l'axe de levier par rapport à l'axe de pivotement (14).

3. Collecteur solaire selon la revendication 1 ou 2, **caractérisé en ce que** le dispositif d'accouplement est réalisé sous forme de dispositif d'accouplement mécanique (20).

4. Collecteur solaire selon la revendication 1 ou 2, **caractérisé en ce que** le dispositif d'accouplement est réalisé sous forme de dispositif d'accouplement électrique (24, 28).

5. Collecteur solaire selon l'une quelconque des revendications précédentes, **caractérisé en ce que** les unités de collecteur (10, 10') sont disposées sur un support de base (2, 2') de telle sorte **en ce qu'**une des unités de collecteur (10, 10') qui est plus éloignée du soleil est rehaussée par rapport à l'une des unités de collecteur (10, 10') qui est plus proche du soleil.

6. Collecteur solaire selon l'une quelconque des revendications 2 à 5, **caractérisé en ce que** les axes de pivotement (14, 14') des unités de collecteur individuelles (10, 10') sont fixés à une première structure (20) et les points de levier (15, 15') des unités de collecteur individuelles (10, 10') sont fixés à une deuxième structure (22), les deux structures (20, 22) pouvant être déplacées le long d'un plan l'une par rapport à l'autre, de telle sorte que les unités de collecteur (10, 10') soient pivotées.

7. Collecteur solaire selon l'une quelconque des revendications 2 à 6, **caractérisé en ce qu'**au niveau de l'axe de pivotement (14, 14') de chaque unité de collecteur (10, 10') est prévu un tube métallique (16) rigide en torsion et connecté à l'élément de miroir respectif (11, 11'), qui présente de préférence un levier (17) connecté fixement à lui pour former le palier au niveau du point de levier (15, 15').

8. Collecteur solaire selon la revendication 7, **caractérisé en ce que** le tube métallique rigide en torsion (16) est rehaussé par rapport au support de base au moyen d'un support surélevé (19) de telle sorte que les unités de collecteur (10, 10') puissent pivoter avec les miroirs en forme de canaux en demi-paraboles (11, 11') au-delà de l'horizontale.

9. Collecteur solaire selon l'une quelconque des revendications précédentes, **caractérisé en ce que** le dispositif de blocage (131, 132) est réalisé de préférence sous forme de ressort.

10. Collecteur solaire selon l'une quelconque des revendications 2 à 9, **caractérisé en ce que** l'élément de miroir (11, 11') de chaque unité de collecteur (10, 10') présente un point de liaison pour former le palier au niveau du point de levier (15, 15').

11. Collecteur solaire selon l'une quelconque des revendications précédentes, **caractérisé en ce que** des cellules photovoltaïques sont disposées sur le côté des éléments de miroir (11, 11') opposé aux éléments récepteurs (12, 12').

12. Collecteur solaire selon l'une quelconque des revendications 5 à 11, **caractérisé en ce qu'**il est prévu un mécanisme de rotation (30) pouvant tourner autour d'un axe non parallèle à l'axe de pivotement (14, 14'), sur lequel est disposé le support de base (2).

13. Collecteur solaire selon la revendication 12, **caractérisé en ce que** le mécanisme de rotation (30) est surélevé de telle sorte qu'il forme un plan oblique (a) et que l'unité de collecteur (10) éloignée du soleil soit rehaussée par rapport à une unité de collecteur (10') plus proche du soleil.

14. Collecteur solaire selon la revendication 12 ou 13, **caractérisé en ce que** le support de base est réalisé sous la forme d'un support en forme de X (2') aux extrémités duquel est disposé à chaque fois un côté des unités de collecteur (10, 10').

15. Collecteur solaire selon l'une quelconque des revendications 12 à 14, **caractérisé en ce que** le mécanisme de rotation (30) est réalisé de manière à pouvoir pivoter complètement sur au moins un tour complet de 360 degrés, une courroie dentée (34) qui s'engage avec la périphérie extérieure du mécanisme de rotation (30) ou un câble d'acier périphérique (36), qui est connecté fixement au mécanisme de rotation (30) en au moins un endroit (37), et qui est enroulé autour d'une bobine entraînée (38), étant prévus en tant qu'entraînement, ou le mécanisme de rotation (30) présente, au niveau de sa périphérie extérieure, une crémaillère périphérique (33), de préférence en plastique, dans laquelle s'engage une unité d'entraînement comprenant une roue dentée (35).

16. Collecteur solaire selon l'une quelconque des revendications 12 à 15, **caractérisé en ce que** les lignes d'alimentation de la ou des unités de collecteur (10, 10') sont guidées par le biais de guidages rotatifs dans la région de l'axe de rotation du mécanisme de rotation (30).
